# EUROPÄISCHE PATENTANMELDUNG

(11) **EP 4 404 443 A1**
(43) Veröffentlichungstag der Anmeldung: **24.07.2024**
(21) Anmeldenummer: 24151259.9
(22) Anmeldetag: 10.01.2024
(51) Int. Cl.: H02K 15/02, H01F 41/02, B32B 37/12

(54) **VERFAHREN ZUM HERSTELLEN EINES VERBUNDS AUS ELEKTROBLECHEN**

(30) Priorität: 18.01.2023 DE 102023101065
(71) Anmelder: ThyssenKrupp Steel Europe AG, 47166 Duisburg (DE)
(72) Erfinder: Lewe, Tobias, 48147 Münster (DE); Machalitza, Karsten, 45473 Mülheim (DE)
(74) Vertreter: ThyssenKrupp Steel Europe AG

(57) **Zusammenfassung**

Die vorliegende Erfindung betrifft ein Verfahren zum Herstellen eines Verbunds (V) aus Elektroblechen, bei welchem ein erstes Elektroblech (1), welches beidseitig mit einer thermisch aktivierbaren Klebstoffschicht auf Polymerbasis beschichtet ist, und mindestens ein zweites Elektroblech (1), welches beidseitig mit einer Kunststoffschicht auf Polymerbasis beschichtet ist, bereitgestellt werden, wobei die Elektrobleche (1) übereinander in Kontakt gebracht werden und unter Kraftweinwirkung zu einem Verbund (V) miteinander verbunden werden, wobei vor dem Inkontaktbringen die Klebstoffschicht nur auf der Seite des ersten Elektroblechs (1) thermisch aktiviert wird, welche zum Kontaktieren und Verbinden mit dem zweiten Elektroblech (1) zugewandt ist.

## Beschreibung

Die Erfindung betrifft ein Verfahren zum Herstellen eines Verbunds aus Elektroblechen.

Lamellen aus Elektroband werden für die Herstellung von Rotoren bzw. Statoren benötigt und meist in Form von monolithischen Elektrobandbändern im Stanzprozess eingesetzt, um die einzelnen Lamellen zu stanzen, welche zu einem Lamellenpaket verbunden werden, vgl. DE 10 2020 109 985 A1 und DE 10 2018 107 916 A1. Aufgrund des starken Wachstums der Elektromobilität und des zunehmenden Einsatzes von "dünneren" Elektroblechen muss mit einem Anstieg des zeitlichen Aufwands des Stanzens gerechnet werden. Um die Ausbeute zu erhöhen, kann der gesamte Prozess auch mehrreihig sein, das heißt es können parallel und/oder hintereinander zwei oder mehr als zwei Lamellenaus einem Elektroband (je nach Anzahl, Geometrie und Anordnung diagonal versetzt oder gedreht zueinander) ausgestanzt werden, vgl. DE 10 2020 109 985 A1.

Des Weiteren ist auch bekannt, zwei oder mehrere monolithische Elektrobleche zu einem Verbund miteinander zu verbinden und den Verbund dem Stanzprozess zuzuführen, vgl. DE 10 2018 133 202 A1 und DE 10 2018 133 204 A1 oder zwei monolithische Elektrobleche übereinander anzuordnen und in der Schneidvorrichtung durch Halteelemente ein unerwünschtes Verrutschen zu verhindern, wie in der DE 10 2015 101 390 A1. Dies kann ein wesentlicher Beitrag zur Wirtschaftlichkeit des Stanzprozesses sein.

Aus dem Stand der Technik ist ferner bekannt, beidseitig mit einer Klebstoffschicht beschichtete Elektrobänder bereitzustellen, zu erwärmen und zu einem Verbund miteinander zu verbinden.

Unter einer Klebstoffschicht in der vorliegenden Erfindung wird ein Klebstoff verstanden, der auch bei erhöhten Temperaturen (>125 °C) einen geringen Verlust in der Haftung aufzeigt. Dies zeigt sich in Zugscherfestigkeiten > 3,5 N/mm² zwischen 125 °C und 180 °C. Im Stand der Technik bekannte alternative Systeme sind Systeme mit Backlackschichten, z.B. Verbundsysteme mit einem Elektroband beidseitig mit Backlack beschichtet im Verbund mit einem nicht mit Backlack beschichteten Elektroband. Dies sind im Rahmen der vorliegenden Erfindung keine geeigneten Verbundsysteme, da eine Backlackschicht keine ausreichende Klebstoffwirkung im Bereich > 125 °C besitzt, d.h. Zugscherfestigkeiten ≤ 3,5 N/mm² zwischen 125 °C und 180 °C. Diese Systeme sind somit nicht geeignet für den Einsatz in Rotoren bzw. Statoren, da in deren Einsatz Temperaturen > 125 °C entstehen können und dann eine gute Paketstabilität nicht gewährleistet wäre.

Die WO 2021/047788 A1 beschreibt inline Elektrobänder mit einer Klebstoffschicht beidseitig zu beschichten, die Elektrobleche durch eine Heizeinrichtung hindurchzuführen, die erwärmten Elektrobleche zu einem Verbund unter Krafteinwirkung zu verbinden und anschließend den Verbund durch eine Kühleinrichtung hindurchzuführen. Problematisch erweist sich jedoch die vollständige Erwärmung der mit Klebstoffschicht beschichteten und damit verbunden der vollständigen Aktivierung des Klebstoffs, da die am zu erzeugenden Verbund jeweils nach außen weisende Seite der beschichteten Elektrobänder aktiviert wird, was sich nachteilig auf die nachfolgenden Prozesse durch die Aktivierung respektive Teilaushärtung auswirken kann.

Daher ist die Aufgabe, ein Verfahren zum Herstellen eines Verbunds aus Elektrobändern bereitzustellen, welches die vorgenannten Nachteile vermeidet.

Gelöst wird diese Aufgabe durch ein Verfahren mit den Merkmalen des Patentanspruchs 1.

Die Lehre betrifft ein Verfahren zum Herstellen eines Verbunds aus Elektroblechen, bei welchem ein erstes Elektroblech und mindestens ein zweites Elektroblech bereitgestellt werden, wobei:
a) das erste Elektroblech beidseitig mit einer thermisch aktivierbaren Klebstoffschicht auf Polymerbasis beschichtetet ist und das mindestens oder genau zweite Elektroblech nicht mit einer thermisch aktivierbaren Klebstoffschicht auf Polymerbasis beschichtetet ist; falls mehr als ein zweites Elektroblech eingesetzt wird, ist das dritte und jedes weitere n-te (mit n≥3) Elektroblech mit einer thermisch aktivierbaren Klebstoffschicht auf Polymerbasis auf der Seite des jeweiligen Elektroblechs beschichtetet, welche zum Kontaktieren und Verbinden mit dem zweiten Elektroblech beziehungsweise n-1-te Elektroblech zugewandt ist; oder
b) das erste Elektroblech einseitig mit einer thermisch aktivierbaren Klebstoffschicht auf Polymerbasis beschichtetet ist, auf der Seite des ersten Elektroblechs, welche nicht zum Kontaktieren und Verbinden mit dem zweiten Elektroblech zugewandt ist und das mindestens oder genau zweite Elektroblech mit einer thermisch aktivierbaren Klebstoffschicht auf Polymerbasis beschichtetet ist, auf der Seite des zweiten Elektroblechs, welche zum Kontaktieren und Verbinden mit dem ersten Elektroblech zugewandt ist; falls mehr als ein zweites Elektroblech eingesetzt wird, ist das dritte und jedes weitere n-te (mit n≥3) Elektroblech mit einer thermisch aktivierbaren Klebstoffschicht auf Polymerbasis auf der Seite des jeweiligen Elektroblechs beschichtetet, welche zum Kontaktieren und Verbinden mit dem zweiten Elektroblech beziehungsweise n-1-te Elektroblech zugewandt ist; oder
c) das erste Elektroblech einseitig mit einer thermisch aktivierbaren Klebstoffschicht auf Polymerbasis beschichtetet ist, auf der Seite des ersten Elektroblechs, welche nicht zum Kontaktieren und Verbinden mit dem zweiten Elektroblech zugewandt ist und das mindestens zweite Elektroblech beidseitig mit einer thermisch aktivierbaren Klebstoffschicht auf Polymerbasis beschichtetet ist; oder
d) das erste Elektroblech beidseitig mit einer thermisch aktivierbaren Klebstoffschicht auf Polymerbasis beschichtetet ist, und das mindestens oder genau zweite Elektroblech mit einer thermisch aktivierbaren Klebstoffschicht auf Polymerbasis beschichtetet ist, auf der Seite des zweiten Elektroblechs, welche zum Kontaktieren und Verbinden mit dem ersten Elektroblech zugewandt ist; falls mehr als ein zweites Elektroblech eingesetzt wird, ist das dritte und jedes weitere n-te (mit n≥3) Elektroblech mit einer thermisch aktivierbaren Klebstoffschicht auf Polymerbasis auf der Seite des jeweiligen Elektroblechs beschichtetet, welche zum Kontaktieren und Verbinden mit dem zweiten Elektroblech beziehungsweise n-1-te Elektroblech zugewandt ist; oder
e) das erste Elektroblech beidseitig mit einer thermisch aktivierbaren Klebstoffschicht auf Polymerbasis beschichtetet ist und das mindestens zweite oder genau zweite Elektroblech und jedes weitere Elektroblech beidseitig mit einer thermisch aktivierbaren Klebstoffschicht auf Polymerbasis beschichtetet ist;
die Elektrobleche übereinander in Kontakt gebracht werden und unter Kraftweinwirkung zu einem Verbund miteinander verbunden werden.

Um die Nachteile aus dem Stand der Technik zu vermeiden, wird vor dem in Kontakt bringen die Klebstoffschicht nur auf der Seite des ersten Elektroblechs und/oder mindestens zweiten Elektroblechs thermisch aktiviert, welche zum Kontaktieren und Verbinden mit einem weiteren Elektroblech zugewandt ist. Im Fall der oben beschriebenen Ausführung a), in welcher das mindestens oder genau zweite Elektroblech nicht mit einer thermisch aktivierbaren Klebstoffschicht auf Polymerbasis beschichtetet ist, erfolgt entsprechend keine Aktivierung.

Dadurch kann sichergestellt werden, dass zumindest die im Verbund nach außen weisende Klebstoffschicht des ersten Elektroblechs, und, falls vorhanden, die nach außen weisende Klebstoffschicht des mindestens zweiten Elektroblechs nicht aktiviert wird und daraus keine Nachteile in den weiteren Prozessstufen resultieren.

In der Ausführung, in welcher mehr als zwei Elektrobleche zu einem Verbund verklebt werden, erfolgt in einer Alternative das in Kontakt bringen und das unter Kraftweinwirkung zu einem Verbund miteinander verbinden aller Elektrobleche in einem Schritt. In einer weiteren Alternative werden zunächst zwei Elektrobleche wie oben beschrieben miteinander verbunden. Dieser erste Verbund wird anschließend als das "erste Elektroblech" angesehen und in mindestens einem weiteren Schritt mit mindestens einem zweiten oder weiteren Elektroblech wie oben beschrieben verbunden.

Das in Kontakt bringen und unter Kraftweinwirkung zu einem Verbund miteinander verbinden des ersten Elektroblechs bzw. ersten Verbundes mit einem mindestens zweiten oder weiteren Elektroblech kann von einer Seite oder gegebenenfalls von beiden Seiten des ersten Elektroblechs bzw. ersten Verbundes wie oben beschrieben erfolgen. Dabei wird ein zweiter Verbund hergestellt, der in einer weiteren Alternative ebenfalls als das "erste Elektroblech" angesehen und in mindestens einem weiteren Schritt mit mindestens einem zweiten oder weiteren Elektroblech wie oben beschrieben verbunden wird. Diese Abfolge ist beliebig fortsetzbar zur Herstellung eines weiteren Verbundes der wieder als das "erste Elektroblech" angesehen und in mindestens einem weiteren Schritt mit mindestens einem zweiten oder weiteren Elektroblech wie oben beschrieben verbunden wird.

Als mindestens zweites oder weiteres Elektroblech wird in einer Alternative ein erster oder zweiter oder weiterer Verbund eingesetzt.

Werden in der Alternative statt Einzel-Elektroblechen Verbünde eingesetzt, können diese durch unterschiedliche Polymerschichten verbunden sein, wie zum Beispiel in der WO 2017/186285 A1, Seite 4, Abs. 3 bis Seite 7, letzter Absatz, beschrieben.

Sowohl die erfindungsgemäß herzustellenden Verbünde als auch Verbünde die als "erstes", "zweites" oder "weiteres" Elektroblech als Ausgangsblech eingesetzt werden, können jeweils alternativ oder zusätzlich zu Klebstoff zumindest punktuell stoff- und/oder formschlüssig miteinander verfügt sein. Die zumindest 2 übereinander angeordneten Elektrobleche sind stoff- und/oder formschlüssig miteinander verfügt durch ein Verfahren ausgewählt aus der Gruppe enthaltend oder bestehend aus: Kleben, Schweißen, Löten und Clinchen. Die jeweilige Verfügung ist zumindest punktuell, kann aber auch lokal, also flächig ausgelegt sein, wie in DE 10 2018133 202 A1, insbesondere Absätze 9-12, beschrieben.

Bevorzugt ist die oben beschriebene Ausführung e), in welcher das erste Elektroblech beidseitig mit einer thermisch aktivierbaren Klebstoffschicht auf Polymerbasis beschichtetet ist, und das mindestens zweite, bevorzugt genau zweite Elektroblech und gegebenenfalls jedes weitere Elektroblech beidseitig mit einer thermisch aktivierbaren Klebstoffschicht auf Polymerbasis beschichtet ist. Um die Nachteile aus dem Stand der Technik zu vermeiden, wird auch in dieser Ausführung, vor dem in Kontakt bringen die Klebstoffschicht nur auf der Seite des ersten Elektroblechs und/oder mindestens zweiten Elektroblechs thermisch aktiviert, welche zum Kontaktieren und Verbinden mit dem zweiten beziehungsweise einem weiteren Elektroblech zugewandt ist. Bei Bereitstellen von genau zwei Elektroblechen wird mithin vor dem in Kontakt bringen die Klebstoffschicht nur auf der Seite des ersten Elektroblechs thermisch aktiviert, welche zum Kontaktieren und Verbinden mit dem zweiten Elektroblech zugewandt ist. Gegebenenfalls wird zusätzlich die Klebstoffschicht nur auf der Seite des zweiten Elektroblechs thermisch aktiviert, welche Elektrobleche zum Kontaktieren und Verbinden mit dem ersten zugewandt ist. Dadurch kann sichergestellt werden, dass zumindest die im Verbund nach außen weisende Klebstoffschicht des ersten Elektroblechs, nicht aktiviert wird, beziehungsweise bei Bereitstellen von genau zwei Elektroblechen, wobei jedes beidseitig mit einer thermisch aktivierbaren Klebstoffschicht auf Polymerbasis beschichtetet ist, wird sichergestellt, dass zumindest die im Verbund nach außen weisende Klebstoffschicht des ersten und des zweiten Elektroblechs, nicht aktiviert wird.

Die thermisch aktivierbare Klebstoffschicht auf Polymerbasis besteht aus einem Klebstoff, welcher bevorzugt
- 60 Gewichtsteile eines Epoxidharzes, bevorzugt in Festharzform;
- 0,5 bis 15 Gewichtsteile eines latenten Härters, insbesondere 1 bis 10 Gewichtsteile eines latenten Härters, vorzugsweise 2 bis 5 Gewichtsteile eines latenten Härters;
- 1 bis 15 Gewichtsteile eines latenten Beschleunigers, insbesondere 1 bis 10 Gewichtsteile eines latenten Beschleunigers, vorzugsweise 1 bis 5 Gewichtsteile eines latenten Beschleunigers;
enthält.

Der Begriff des latenten Härters bezeichnet einen Stoff, welcher zur Härtung des Epoxidharzes dient, für das Härten jedoch aktiviert werden muss, insbesondere durch Zufuhr von chemischer und/oder thermischer Energie. Der latente Härter wird dem Klebstoff beispielsweise als in Pulverform vorliegender Feststoff zugegeben.

Der Begriff des latenten Beschleunigers bezeichnet einen Stoff, welcher die Härtung des Epoxidharzes durch den latenten Härter beschleunigt. Das Attribut latent bezieht sich auch im Zusammenhang mit dem Beschleuniger darauf, dass auch der Beschleuniger zur Erfüllung seiner Funktion zuvor durch chemische und/oder thermische Energie aktiviert werden muss. Der latente Beschleuniger wird dem Klebstoff beispielsweise als in Pulverform vorliegender Feststoff zugegeben.

Die oben angegebene Zusammensetzung bezieht sich auf die Mischung von den als Festkörper vorliegenden Komponenten in den angegebenen Gewichtsteilen zu einer Klebstoffmischung, welche in Dispersion und/oder Lösung mit einer geeigneten Flüssigkeit zu dem Klebstoff wird, der eine Klebstoffbeschichtung bilden kann. In verwendbarem Zustand, also in zur Beschichtung geeigneter Form, liegt der Klebstoff mit den angegebenen Komponenten bevorzugt als Dispersion der oben angegebenen Zusammensetzung in einem Dispersionsmedium, insbesondere als wässrige Dispersion, vor.

Das in dem beschriebenen Klebstoff vorhandene Epoxidharz umfasst eine oder mehrere Epoxidharzkomponenten mit mehr als einer Epoxidgruppe, von denen vorzugsweise mindestens ein Epoxidharz einen Erweichungspunkt größer 50 Grad Celsius besitzt.

Bei den Epoxidharzen kann es sich sowohl um aliphatische, cycloaliphatische oder aromatische Epoxidharze handeln. Aliphatische Epoxidharze beinhalten Komponenten, die sowohl eine aliphatische Gruppe als auch mindestens zwei Epoxidharzgruppen tragen.

Beispiele für aliphatische Epoxidharze können sein Butandioldiglycidylether, Hexandioldiglycidylether, Dimethylpentandioxid, Butadiendioxid, Diethylenglycoldiglycidylether.

Cycloaliphatische Epoxidharze sind bspw. 3-Cyclohexenylmethyl-3-cyclohexylcarboxylatdiepoxid, 3, 4-Epoxycyclohexylalkyl-3',4'-epoxycyclohexancarboxylat, 3,4-Epoxy-6-methylcyclohexylmethyl-3',4'-epoxy-omethylcyclohexancarboxylat, Vinylcyclohexandioxid, Bis(3,4-Epoxycyclohexylmethyl)adipat, Dicyclopentadiendioxid, 1,2-Epoxy-6-(2,3-epoxypropoxy)hexahydro-4,7-methanoindan.

Aromatische Epoxidharze sind bspw. Bisphenol-A-Epoxidharze, Bisphenol-F-Epoxidharze, Phenol-Novolac-Epoxidharze, Cresol-Novolac-Epoxidharze, Biphenylepoxidharze, Biphenolepoxidharze, 4,4'-BiphenylEpoxidharze, Divinylbenzoldioxid, 2-Glycidylphenylglycidylether, Tetraglycidylmethylendianilin.

In einer bevorzugten Ausgestaltung ist das Epoxidharz Bisphenol A-Epoxidharz.

Als latenter Härter wird eine Substanz oder ein Gemisch von Substanzen verwendet, die vorzugsweise bei Temperaturen im Bereich von 80 Grad Celsius bis 200 Grad Celsius Härtungsreaktionen mit den Epoxidharzen des Klebstoffs eingehen.

Der Härter kann Dicyandiamide, Aziridinderivate, Triazinderivate, Imidazoline, Imidazole, o-Tolylbiguanid, cyclische Amidine, organische Hexafluoroantimonat- oder Hexafluorophosphat-Verbindungen oder BF3-Aminkomplexe enthalten. Die Verbindungen können einzeln oder in Kombination eingesetzt werden.

Beispiele sind 2-Methylimidazol, 2-Undecylimidazol, 2-Heptadecylimidazol, 1,2-Dimethylimidazol, 2-Ethyl-4-methylimidazol, 2-Phenylimidazol, 2-Phenyl-4-metylimidazol, 1-Benzyl-2-metylimidazol, 1-Benzyl-2-phenylimidazol, 1-Cyanoethyl-2-metylimidazol, 1-Cyanoethyl-2-undecylimidazol, 1-Cyanoethyl-2-ethyl-4-metylimidazol, 1-Cyanoethyl-2-phenylimidazol, 1-Cyanoethyl-2-undecylimidazoliumtrimellitat, 1-Cyanoethyl-2-phenylimidazolium-trimellitat, 2,4-Diamino-6-[2'-methylimidazolyl-(1')]-ethyl-s-triazin, 2,4-Diamino-6-[2'undecylimidazolyl-(1')]-ethyl-s-triazin, 2,4-Diamino-6-[2'-ethyl-4'-methylimidazolyl-(1') ]-ethyl-s-2,4-diamino6-[2"methylimidazolyl-(1')]-ethyl-s-triazin, 2-Phenylimidazol, 2-Phenyl-4,5-dihydroxymetylimidazol, 2-Phenyl4-methyl-5-hydroxy-methylimidazol, 2,3-Dihydro-1H-pyrrolo[1,2-a]benzimidazol, (1-Dodecyl-2-methyl-3-benzyl)imidazoliumchlorid, 2-Methylimidazolin, 2-Phenylimidazolin, 2,4-Diamino-6-vinyl-1,3,5-triazin, 2,4-Diamino-6-vinyl-1,3,5-triazin Isocyansäure-Addukt, 2,4-Diamino-6-methacryloyloxyethyl-1,3,5-triazin, 2,4-Diamino6-methacryloyloxyethyl-1,3,5-triazin Isocyansäure-Addukt, 1,3,5-Triazin, 2,4-Diamino-6-methyl-1,3,5-triazin, 2, 4-Diamino-6-nonyl-1,3,5-triazin, 2,4-Diamino-6-phenyl-1,3,5-triazin, 2,4-Dimethoxy-6-methyl-1,3,5-triazin, 2, 4-Dimethoxy-6-phenyl-1,3,5-triazin, 2-Amino-4,6-dimethyl-1,3,5-triazin, 2-Amino-4-dimethylamino-6-methyl-1, 3,5-triazin, 2-Amino-4-ethoxy-6-methyl-1,3,5-triazin, 2-Amino-4-ethyl-6-methoxy-1,3,5-triazin, 2-Amino-4-methoxy-6-methyl-1,3,5-triazin, 2-Amino-4-methyl-6-phenyl-1,3,5-triazin, 2-Chloro-4,6-dimethoxy-1,3,5-triazin, 2-Ethylamino-4-methoxy-6-methyl-1,3,5-triazin, 1-o-Tolylbiguanid.

In einer bevorzugten Ausgestaltung enthält oder ist der Beschleuniger ein Harnstoffderivat und/oder ein Imidazol.

Die Klebstoffzusammensetzung kann darüber hinaus noch weitere Komponenten enthalten, beispielsweise ein Korrosionsschutzadditiv.

Bevorzugt ist, wenn der Härter ein Dicyandiamid, ein Imidazol, einen BF3-Aminkomplex oder eine Kombination derselben enthält oder ist.

In einer anderen bevorzugten Ausführungsform ist vorgesehen, dass der Klebstoff weiterhin 0,2 bis 8 Gewichtsteile, bevorzugt 0,2 bis 5 Gewichtsteile, eines Farbstoffs aufweist. Hierdurch kann das optische Erscheinungsbild der Oberfläche gefälliger gestaltet werden. Der Farbstoff kann aus der Gruppe der Flammruße, der Eisenoxidschwarzpigmente, oder der wasserlöslichen Farbstoffe ausgewählt sein oder einer Mischung von mehreren der vorgenannten.

Bevorzugt enthält der Klebstoff eines oder mehrere der dem Fachmann bekannten Isolationsadditive, wobei der Begriff der Isolationsadditive sich auf speziell zur Erhöhung des elektrischen Widerstands des Klebstoffs bereitgestellte Additive bezieht. Die Isolationsadditive können in Mengen von 1 bis 20 Gewichtsteilen, bevorzugt 1 bis 10 Gewichtsteilen, besonders bevorzugt 1 bis 5 Gewichtsteilen, in dem Kleber enthalten sein.

Bevorzugt enthält der Klebstoff eines oder mehrere der dem Fachmann bekannten Korrosionsschutzadditive. Die Korrosionsschutzadditive können in Mengen von 1 bis 10 Gewichtsteilen, bevorzugt 1 bis 5 Gewichtsteilen, in dem Kleber enthalten sein.

In einer Variante des Verfahrens enthält der latente Beschleuniger ein Harnstoffderivat.

Der im Klebstoff enthaltene latente Beschleuniger besteht vorzugsweise zu wenigstens 50 Gew.-%, noch bevorzugter wenigstens 90 Gew.-%, noch bevorzugter vollständig, aus Harnstoffderivat. Als Harnstoffderivat wird bevorzugt ein N,N-Dimethylharnstoff oder ein N,N'-Dimethylharnstoff oder ein bifunktionelles Harnstoffderivat verwendet, besonders bevorzugt mit zwei Harnstoffgruppen als funktionelle Gruppen, im speziellen besonders bevorzugt ein 4,4'-Methylen-bis-(Phenyldimethylharnstoff), oder eine Mischung mehrerer der vorgenannten.

Der im Klebstoff enthaltene latente Beschleuniger besteht vorzugsweise zu wenigstens 50 Gew.-%, noch bevorzugter wenigstens 90 Gew.-%, noch bevorzugter zu wenigstens 98 Gew.-%, speziell bevorzugt vollständig, aus 4,4'-Methylen-bis-(Phenyldimethylharnstoff).

In einer Variante des Verfahrens wird als Harnstoffderivat auch oder ausschließlich ein unsymmetrisch substituierter Harnstoff verwendet.

In einer alternativen Weiterbildung des Verfahrens wird ein Harnstoffderivat eingesetzt, bei welchem mindestens eines, bevorzugt 2, besonders bevorzugt 3 Wasserstoffatome durch, voneinander unabhängig, Alkylgruppen und/oder Phenylgruppen, die ihrerseits substituierter sein können, ersetzt sind. Bevorzugt handelt es sich bei den Alkylgruppen um Methyl, Ethyl, Propyl oder Butyl, bevorzugt Methyl; bei der Phenylgruppe handelt es sich um Phenyl oder um ein Alkyl substituiertes Phenyl, bevorzugt in Position 4, ebenfalls bevorzugt als ein Alkyl der oben genannten Alkyle. In einer weiteren Alternative wird im Sinne der Erfindung ein difunktionelles Harnstoffderivat als ein oben beschriebenes Derivat bezeichnet, welches 2 funktionelle Gruppen aufweist. Funktionelle Gruppen sind Atomgruppen, welche die Stoffeigenschaften und insbesondere das Reaktionsverhalten der Verbindung maßgeblich bestimmen, insbesondere gehen die funktionellen Gruppen Reaktionen ein. Ferner ist das einzusetzende Harnstoffderivat halogenfrei. In einer Alternative weist das einzusetzende Harnstoffderivat 2 Harnstoffderivate als funktionelle Gruppen auf. Vorteilhaft können dadurch Epoxidharze ohne die Anwesenheit von Dicyanamiden als Vernetzer gehärtet werden.

Als Elektroblech, auch Elektroband bezeichnet, welches als Blech oder vorzugsweise als Band zum Herstellen eines Verbunds bereitgestellt werden kann, eignen sich kornorientiertes Elektroband, sogenanntes KO-Elektroband, oder alternativ und bevorzugt nicht-kornorientiertes Elektroband, sogenanntes NO-Elektroband, aber auch andere weichmagnetische Werkstoffe in Bandform und geringen Dicken

Das Elektroblech kann beispielsweise eine Stahllegierung mit einer Dichte von 7,40 - 7,75 g/cm³ enthaltend neben Eisen und herstellungsbedingt unvermeidbaren Verunreinigungen folgende Legierungselemente (in Gew.-%, wobei die Summe 100% ergibt):
Si: 0,1 bis 3,50,
Al: 0,01 bis 1,60,
Mn: 0,07 bis 0,65,
optional bis zu 0,25 P;
bevorzugt
Si: 2,30 bis 3,40 %,
Al: 0,60 bis 1,10 %,
Mn: 0,050 bis 0,60 %,
C: bis zu 0,010 %, wobei insbesondere mindestens 0,0001 % vorhanden sein kann,
N: bis zu 0,010 %,
S: bis zu 0,0040 %,
P: bis zu 0,080 %, wobei insbesondere mindestens 0,0010 % P vorhanden sein kann.
aufweisen. Die Legierungselemente C, N, S und P, wenn sie nicht gezielt zulegiert oder zugelassen werden, zählen zu der Gruppe der sogenannten herstellungsbedingt unvermeidbaren Verunreinigungen in der Stahllegierung. Die Summe aller herstellungsbedingt unvermeidbaren Verunreinigungen sollte 0,010 Gew.-% nicht überschreiten. S muss kleiner als 0,0010 Gew.-% eingestellt werden, so dass die magnetischen Eigenschaften nicht negativ beeinflusst werden.

Das Elektroblech weist gemäß einer Ausgestaltung eine Dicke von mindestens 0,10 mm, insbesondere mindestens 0,20 mm, vorzugsweise mindestens 0,22 mm, bevorzugt mindestens 0,24 mm und maximal 0,50 mm, insbesondere maximal 0,40 mm, vorzugsweise maximal 0,35 mm, bevorzugt maximal 0,33 mm auf.

Es kann vorgesehen sein, dass die Klebstoffbeschichtung auf dem Blech einseitig oder beidseitig aufgebracht ist. Wenn beidseitig eine Klebstoffbeschichtung aufgebracht ist, kann die Dicke der Beschichtung gleich sein, aber auch unterschiedliche Dicken können vorgesehen sein.

Als bevorzugte Dicke der Klebstoffbeschichtung, das bedeutet bei einseitigem Klebstoff die Dicke der Beschichtung auf der einen Seite beziehungsweise bei zweiseitiger Klebstoffbeschichtung die Gesamtdicke der Klebstoffbeschichtung auf beiden Seiten addiert, beträgt zwischen 1 Mikrometern und 20 Mikrometern, bevorzugt zwischen 2 Mikrometern und 10 Mikrometern. Besonders bevorzugt ist eine Gesamtdicke zwischen 4 und 8 Mikrometern.

Besonders bevorzugt ist die erste Klebstoffbeschichtung der ersten Blechoberfläche und die zweite Klebstoffbeschichtung der zweiten Blechoberfläche mit einer zweiten Dicke derart aneinander angepasst, dass die erste Dicke wenigstens das 1,5-fache, bevorzugt das 2-fache der zweiten Dicke beträgt. Ganz besonders bevorzugt ist eine beidseitige Beschichtung mit einer Gesamtdicke beider Beschichtungen zwischen 4 und 7 Mikrometern, bevorzugt zwischen 5 und 6,5 Mikrometern.

In einer Alternative, in der beide Seiten der Elektrobleche mit Klebstoff beschichtet sind, weist die Klebstoffschicht auf einer Elektroblechseite eine Dicke zwischen 1 und 5 Mikrometern, bevorzugt zwischen 2 und 4 Mikrometern, besonders bevorzugt zwischen 2,5 und 3 Mikrometern auf und auf der gegenüberliegenden Seite eine Dicke zwischen 2 und 7 Mikrometern, bevorzugt zwischen 3 und 6 Mikrometern, besonders bevorzugt zwischen 4 und 5 Mikrometern auf.

In einer weiteren Alternative ist zwischen Blech und Klebstoffschicht eine Vorbehandlung, ein Haftvermittler, eine Phosphatierung und/oder ein Isolator, beispielsweise als Isolierlackschicht ausgebildet, angeordnet. In einer weiteren Alternative oder zusätzlich ist auf der der Klebstoffschicht gegenüberliegenden Seite des Blechs nur Isolierlack angeordnet oder es handelt sich um eine unbeschichtete Oberfläche. Im Fall der oben beschriebenen Ausführung a), in welcher das mindestens oder genau zweite Elektroblech nicht mit einer thermisch aktivierbaren Klebstoffschicht auf Polymerbasis beschichtetet ist, können eine oder beide Seiten des Blechs unabhängig voneinander eine Vorbehandlung, ein Haftvermittler, eine Phosphatierung, ein Isolator und/oder eine unbeschichtete Oberfläche aufweisen.

Gemäß einer Ausgestaltung wird vor dem Inkontaktbringen auch die Klebstoffschicht nur auf der Seite des mindestens zweiten Elektroblechs thermisch aktiviert, welche zum Kontaktieren und Verbinden mit dem ersten Elektroblech zugewandt ist. Somit werden die Klebstoffschichten auf den zu kontaktierenden Seiten der Elektrobleche thermisch aktiviert, um eine ausreichende Verbindung des Verbunds sicherzustellen.

Es können auch mehr als zwei Elektrobleche zu einem Verbund miteinander verbunden werden, wobei dann die Klebstoffschichten, über welche die jeweiligen Elektrobleche miteinander in Kontakt gebracht und anschließend unter Krafteinwirkung miteinander verbunden werden, auf den jeweiligen Seiten thermisch aktiviert werden.

Gemäß einer Ausgestaltung erfolgt die thermische Aktivierung durch thermische Aktivierungsmittel. Dabei kann ein oder mehrere in Prozessrichtung nebeneinander und/oder hintereinander angeordnete Aktivierungsmittel vorgesehen sein. Das Aktivierungsmittel zur Aktivierung der Klebstoffschicht ist in der Lage, einen Wärmeeintrag in die Klebstoffschicht einzubringen, wobei die Erzeugung des Wärmeeintrags grundsätzlich auf beliebige Weise vorgenommen werden kann. Insbesondere kann das Aktivierungsmittel ein Mittel zur Ausgabe von Infrarotstrahlung aufweisen, beispielsweise einen NIR-Emitter, also ein Leuchtmittel, das zur Ausgabe von elektromagnetischer Strahlung im NIR-Wellenlängenspektrum, also mit Wellenlängen zwischen 400 nm und 10 µm, bevorzugt zwischen 780 nm bis 3 µm, ausgebildet ist. Alternativ oder zusätzlich kann das Aktivierungsmittel eine induktive Erwärmung, insbesondere Induktionsspulen, zum Erwärmen der Klebstoffschicht aufweisen.

In Verbindung mit einer Planlagen- bzw. Profilmessung (z.B. mittels Laser (Triangulation) - idealerweise kombiniert mit einer für den Stanzprozess notwendigen Dickenmessung) lässt sich eine Regelung der Planlage erreichen, sodass eine Richteinheit schonend eingesetzt werden kann. Besonders bevorzugt wird auch die Kühlung über Bandbreite segmentiert und regelbar ausgeführt. Die Dickenmessung über die Bandbreite könnte gleichzeitig zur Steuerung einer Dreheinrichtung in dem Folgeverbundwerkzeug genutzt werden.

Dünnere Bleche, im Bereich von unter 0,35 mm Dicke, insbesondere kleiner oder gleich 0,25 mm lassen sich schlechter, langsamer und störungsanfälliger verarbeiten, z.B. stanzen, transportieren oder laserstrahlschneiden. Durch die Verbindung mit mindestens einem zweiten Blech ist die Führung einfacher und zum Beispiel die Ausführung von mehrspurigen Werkzeugen für dünnste Bleche, bzw. deren effizienteren Betrieb, wird ermöglicht. Zusätzlich werden so zusätzliche konstruktive Freiheitsgrade erzielt, insbesondere betreffend Formgebung.

Um eine insbesondere durch Wärmeleitung infolge der einseitigen thermischen Aktivierung unerwünschte thermische Beeinflussung der Klebstoffschicht auf der abgewandten Seite, welche der im Verbund der Elektrobleche nach außen weisenden Seiten entspricht, sicherzustellen, wird gemäß einer bevorzugten Ausgestaltung die Klebstoffschicht auf der von der thermischen Aktivierung abgewandten Seite des ersten Elektroblechs gekühlt.

Gemäß einer weiteren bevorzugten Ausgestaltung wird die Klebstoffschicht, falls vorhanden, auf der von der thermischen Aktivierung abgewandten Seite des mindestens zweiten und jeweils weiteren Elektroblechs gekühlt.

Gemäß einer Ausgestaltung erfolgt die Kühlung durch Kühlmittel. Dabei kann ein oder mehrere in Prozessrichtung nebeneinander und/oder hintereinander angeordnete Kühlmittel vorgesehen sein. Das Kühlmittel zur Kühlung der Klebstoffschicht ist in der Lage, eine Erwärmung und damit Aktivierung der Klebstoffschicht auf der zu kühlenden Seite zu vermeiden, wobei die Kühlung grundsätzlich auf beliebige Weise vorgenommen werden kann. Insbesondere kann das Kühlmittel ein Mittel zum Blasen eines Gasstromes, vorzugsweise Luft, beispielsweise in komprimierter Form, welche Raumtemperatur (ca. 20 °C) beträgt, aufweisen und zum Beispiel durch Schlitzdüsen in anpassbarer Breite auf das Band gerichtet werden.

In einer Ausführung ist Erwärmung und/oder Kühlung so auszuführen, dass die Intensität über Bandbreite gesteuert werden kann, z.B. durch längs in Bandlaufrichtung angeordnete Emitter, Arrays oder Düsen.

Gemäß einer bevorzugten Ausgestaltung werden mindestens zwei einen Walzspalt bildende Rollen als mindestens ein Rollenpaar verwendet, in welchem die Elektrobleche übereinander in Kontakt gebracht und unter Kraftweinwirkung zu einem Verbund miteinander verbunden werden. Die Rollen können zusätzlich oder alternativ zu den vorgenannten Kühlmitteln aktiv gekühlt werden, um eine Erwärmung der Klebstoffschicht auf der nicht thermisch aktivierten Seite zu vermeiden.

In der Ausführung betreffend einen Verbund aus mehr als zwei Elektroblechen, die nicht in einem Schritt übereinander in Kontakt gebracht und unter Kraftweinwirkung zu einem Verbund miteinander verbunden werden, ist zur Herstellung eines zweiten und gegebenenfalls weiteren Verbundes jeweils mindestens ein oben beschriebenes Rollenpaar vorgesehen.

Alternativ oder zusätzlich zu einem Rollenpaar wird der Walzspalt durch Rollen oder durch eine gegebenenfalls gezielt gekühlte Temperaturausgleichzone ausgeführt. Hierdurch wird die Spannungsfreiheit vor dem Abtrennen sichergestellt. Eine Temperaturausgleichzone wird beispielsweise durch zwei übereinander angeordnete, geschlossene Bänder, welche jeweils zwischen zwei Rollen gespannt sind, gebildet. Die übereinander angeordneten mindestens zwei Elektrobleche werden zwischen den beiden übereinander angeordneten, geschlossenen Bändern und Rollen geführt, wodurch ein Flächendruck erzeugt wird.

Die Kühlmittel können auch in Förderrichtung versetzt und/oder hinter dem Walzspalt angeordnet werden um zum Einen die Totzeit zu berücksichtigen, die durch die Wärmeleitung von der aktivierten zur nicht aktivierten Oberfläche entsteht und zum Anderen eine Wechselwirkung mit der Aktivierung zu vermeiden. Hilfsweise kann eine Maskierung eigesetzt werden, zur Trennung der erwärmten Raumzone von der gekühlten Raumzone, zum Beispiel durch Konstruktionbleche. Diese ist auch hilfreich, um eine Kühlung der Bandkanten der aktivierten Seite zu vermeiden.

Besonders bevorzugt erfolgt gemäß einer Ausgestaltung die Kühlung derart, dass die Aktivierungstemperatur der Klebstoffschicht auf der gekühlten Seite nicht überschritten wird. Je nach Zusammensetzung des Klebstoffs, weist dieser eine bestimmte Aktivierungstemperatur auf, welche nicht überschritten werden soll. Durch die Kühlung wird sichergestellt, dass der Klebstoff auf den Außenseiten des Verbundes im späteren Folgeverbundwerkzeug noch aktiv ist und zum Bauteilverbund zur Verfügung steht.

Gemäß einer weiteren bevorzugten Ausgestaltung wird der Verbund nach dem Verbinden der Elektrobleche einem Folgeverbundwerkzeug zugeführt.

Das Folgeverbundwerkzeug beinhaltet alle dem Fachmann bekannten Komponenten wie zum Beispiel Richtmaschine, Bandspeicher, Dreheinrichtungen, Temperier- und/oder Steuereinrichtungen usw.

Insbesondere enthält das Folgeverbundwerkzeug eine Schneidevorrichtung, in welcher Lamellen, Segmente und/oder Einzelzähne durch Stanzen oder Schneiden sequentiell aus dem Verbund getrennt werden. Im Sinne der Erfindung umfasst der Begriff Lamelle auch Segmente und/oder Einzelzähne einer Lamelle. Die Lamelle ist ein aus dem Verbund herausgetrenntes Formteil.

Bevorzugt wird eine Stanzvorrichtung eingesetzt, die ein Scherschneiden mittels Stempel und Matrize ausführt, wobei sich bevorzugt lediglich eine Komponente, also entweder Matrize oder bevorzugt der Stempel, bewegt. In einer Alternative erfolgt dieses Scherschneiden ohne Gegenstempel, es handelt sich mithin nicht um ein sogenanntes Feinschneiden oder Feinstanzen.

Dadurch weist die Stanzkante des unteren Elektroblechs (auf der Matrize aufliegend) im Vergleich zur Stanzkante des oberen Elektroblechs (das Elektroblech, welches zuerst mit dem Stempel in Kontakt tritt) ein unterschiedliches Verhältnis des Schnitt- zu Bruchanteils auf. In einer Ausführung der vorliegenden Erfindung ist das Verhältnis des Schnitt- zu Bruchanteil in der jeweiligen Stanzkante im oberen Blech größer als im unteren Blech. Bevorzugt weist das untere Blech ein Bruchanteil von mindestens 30 %, 40 %, 50 %, 52 %, 54 %, 56 %, 58 %, bevorzugt besonders bevorzugt 60 %, 61 %, 62 %, 63 %, 64 %, insbesondere 65 %, 66 %, 67 %, 68 %, 69 %, 70 %, 71 %, 72 %, 73 %, 74 %, 75 % oder mehr auf. Das Verhältnis von Schnitt- zu Bruchanteil wird dadurch bestimmt, dass an der Stanzkante die Höhe des Schnittbereichs und die Höhe des Bruchbereichs auf Basis der Kornbeschädigung zum Beispiel mittels Mikroskop bestimmt wird und zueinander ins Verhältnis gesetzt wird. Bevorzugt stanzt der Stempel die Lamelle, Segmente und/oder Einzelzähne in ihrer äußeren Begrenzung aus dem Verbund aus.

Alternativ oder zusätzlich kann mittels Laser geschnitten werden. Die Lamellen, Segmente und/oder Einzelzähne werden durch ein Abtrennmittel, welches durch zur Verbundoberfläche senkrechte Kraftauswirkung Lamellen, Segmente und/oder Einzelzähne sequentiell von dem das Lamellen-, Segmente- und/oder Einzelzähne äußere begrenzende Verbund trennt. Besonders bevorzugt sind Schneidmittel und Abtrennmittel Bestandteil einer selben Presse mit dem Vorteil, dass eine hohe Synchronisierung der Stanz- und Abtrennvorgänge vorliegt.

Bevorzugt wird in dem Stanzprozess beim finalen Konturschnitt der Stempel auch als Abtrennmittel verwendet, so dass Scherschneiden und Abtrennvorgang in einem Prozessschritt erfolgen.

Auf das Trennen folgend werden bevorzugt im selben Prozessschritt die Lamelle, Segmente und/oder Einzelzähne in eine unterhalb des Verbunds angeordnete Aufnahmevorrichtung befördert, in welcher die Lamellen, Segmente und/oder Einzelzähne gesammelt werden.

Mithin ist Gegenstand der Erfindung auch ein Verfahren zum Herstellen eines Blechpakets für eine elektrische Maschine, wobei das Blechpaket bevorzugt entweder ein Stator-Paket oder ein Rotor-Paket ist, aufweisend die folgenden Schritte:
A) Bereitstellen eines mit einer zumindest teilweise aushärtbaren Klebstoffbeschichtung auf Polymerbasis versehenen Verbunds aus Elektroblechen,
B) Transportieren des Blechs in ein Folgeverbundwerkzeug, aufweisend: wenigstens ein Schneidmittel, ein Abtrennmittel sowie ein, bevorzugt zwischen dem wenigstens einen Schneidmittel und dem Abtrennmittel angeordnetes, Aktivierungsmittel zum Aktivieren der Klebstoffbeschichtung,
C) Schneiden eines, bevorzugt als Statorlamelle oder als Rotorlamelle oder Segmente und/oder Einzelzähne ausgebildeten, Formteils aus dem in Schritt A) bereitgestellten Verbunds aus Elektroblechen mit dem wenigstens einen Schneidmittel,
D) Aktivieren der Klebstoffbeschichtung des Formteils, bevorzugt des in Schritt C) ausgebildeten Formteils, mittels des Aktivierungsmittels zum Aktivieren der Klebstoffbeschichtung des Formteils,
E) Abtrennen des Formteils von dem Blech mit dem Abtrennmittel,
F) Ablegen des Formteils in einem Positionierbereich zur Bildung eines Formteilstapels in einer Stapeleinheit,
G) optionales Drehen des Formteilstapels um die eigene Achse um einen definierten Winkel nach einer festgelegten Anzahl Wiederholungen der Schritte C) bis F),
H) Wiederholen der Schritte C) bis G) zum kontinuierlichen Füllen des Positionierbereichs mit Formteilen, wobei nach einer vorgegebenen erreichten Anzahl von Formteilen bei dem nachfolgenden Formteil vor Durchführen des Schritts F) mittels einer Behandlungsvorrichtung das nachfolgende Formteil wenigstens bereichsweise mit einem Behandlungsfluid versehen wird für eine Wirkverringerung der Klebstoffbeschichtung dieses nachfolgenden Formteils, sodass die Klebstoffbeschichtung dieses nachfolgenden Formteils in dem Positionierbereich infolge der wirkverringerten Klebstoffbeschichtung eine verbesserte Trennbarkeit eines Stapelabschnitts unterhalb der wirkverringerten Klebstoffbeschichtung von einem Stapelabschnitt oberhalb der wirkverringerten Klebstoffbeschichtung bewirkt.

In Schritt F) bzw. bis Schritt H) werden die Formteile erfindungsgemäß abgelegt, bevorzugt werden sie außerdem, entweder nach jedem abgelegten Formteil oder nach einer bestimmten vorgegebenen Anzahl von mehreren abgelegten Formteilen, oder nach Bildung des Formteilstapels mit einer axialen Kraft, das heißt: einer senkrecht zur flachen Oberfläche weisenden Kraft, angedrückt, beispielsweise mittels eines Anpressstempels von oben und bevorzugt einer Bremse von unten. In einer Alternative ist der Anpressstempel der Stempel der Stanzvorrichtung. Die axiale Kraft unterstützt die durch das Eigengewicht der Formteile sich ergebenden Kräfte, ist aber deutlich geringer als die während eines eventuellen Nachverdichtens angewandten Kräfte.

In einer Ausführung erfolgt ein Nachverdichten des Formteilstapels und Nachhärten des Klebstoffs in der Stapeleinheit, bevorzugt unter erhöhter Temperatur, besonders bevorzugt durch Induktion.

In einer alternativen Ausführung wird ein Formteilstapel der Stapeleinheit entnommen und in einem zweiten, getrennten Prozessschritt in einer Nachverdichtereinheit mittels Druck und gegebenenfalls erhöhter Temperatur, bevorzugt induktiv, nachverdichtet und der Klebstoff final gehärtet.

In einer Ausführungsform wird das oben beschriebene Verfahren ohne Schritt D) durchgeführt und wahlweise mit der Nachverdichtung oder in einem außerhalb der Anlage stehenden, dem Fachmann bekannten, Verbackungsprozess. Dies ermöglicht auch eine Herstellung von Formteilstapeln die aus zum Beispiel konstruktiven Gründen nicht in dem zuvor beschriebenen Verfahren hergestellt werden können.

Gegenstand der vorliegenden Erfindung sind ferner die, wie oben beschriebenen, erfindungsgemäß hergestellten nachverdichteten Formteilstapel, als Rotor oder Stator ausgebildet oder Rotor oder Stator enthaltend nachverdichtete Formteilstapel von Segmenten oder Einzelzähnen.

Weiterer Gegenstand ist ein Elektromotor umfassend ein Gehäuse, einen Stator und Rotor, wobei der Stator oder Rotor ein Stator oder Rotor wie oben beschrieben ist. Ferner ist Gegenstand der Erfindung auch ein Antriebsstrang für ein Fahrzeug umfassend einen Elektromotor wie oben beschrieben
In einer weiteren Ausführungsform wird anstatt des Folgeverbundwerkzeugs eine Spaltvorrichtung zum Längszerteilen des Verbundes, beispielsweise mit Rundmessern und Aufwickeln der Spaltstreifen eingesetzt.

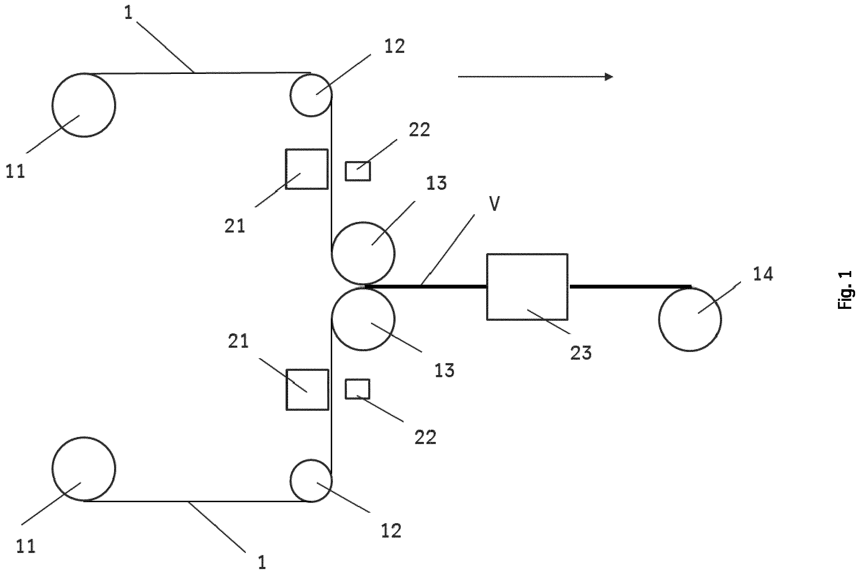

Die einzige **Figur 1** zeigt schematisch ein Ausführungsbeispiel zum Herstellen eines Verbunds (V) aus Elektroblechen (1). Bereitgestellt werden ein erstes und mindestens zweites Elektroblech (1), beispielsweise jeweils in Form eines aufgewickelten Spaltbandes (11), wobei beide Elektrobleche (1) beidseitig mit einer thermisch aktivierbaren Klebstoffschicht auf Polymerbasis beschichtet sind. Die Elektrobleche (1) werden in diesem Beispiel abgehaspelt und über jeweils eine Umlenkrolle (12), welche nicht unbedingt vorhanden sein müssen, zwei einen Walzspalt bildende Rollen (13) zugeführt, in welchem die Elektrobleche (1) übereinander in Kontakt gebracht und unter Kraftweinwirkung zu einem Verbund (V) miteinander verbunden werden. Vor dem Hindurchführen der Elektrobleche (1) durch den Walzspalt wird die Klebstoffschicht nur auf der Seite des ersten Elektroblechs (1) thermisch durch ein thermisches Aktivierungsmittel (21) aktiviert, welches zum Kontaktieren und Verbinden mit dem zweiten Elektroblech (1) zugewandt ist und auch die Klebstoffschicht nur auf der Seite des zweiten Elektroblechs (1) thermisch durch ein thermisches Aktivierungsmittel (21) aktiviert, welche zum Kontaktieren und Verbinden mit dem ersten Elektroblech (1) zugewandt ist. Um eine Erwärmung respektive Aktivierung der Klebstoffschicht auf der der Aktivierung abgewandten Seite zu vermeiden, werden die Klebstoffschichten auf der von der thermischen Aktivierung abgewandten Seite des ersten und des zweiten Elektroblechs (1) durch Kühlmittel (22) gekühlt, wobei bevorzugt die Kühlung derart erfolgt, dass die Aktivierungstemperatur der Klebstoffschicht auf der gekühlten Seite nicht überschritten wird. Die Rollen (13) können entweder alternativ zu Kühlmittel (22) oder zusätzlich aktiv gekühlt werden.

In Prozessrichtung, s. Pfeil, wird der nach dem Verbinden der Elektrobleche mittels Rollen (13) gebildete Verbund (V) einem Folgeverbundwerkzeug (23) zugeführt, in welchem nicht dargestellte Lamellen, welche für den Zusammenbau für Rotor- bzw. Statorpakete für Elektromotoren bevorzugt verwendet werden, sequentiell durch Trennen von dem das Lamellenäußere begrenzende Verbund trennt und bevorzugt im selben Prozessschritt die Lamelle in eine unterhalb des Verbunds angeordnete und nicht dargestellte Aufnahmevorrichtung befördert, in welcher die Lamellen gesammelt werden. Der übrig gebliebene und nicht mehr verwertbare Rest des Verbunds wird zu einem Coil (14) aufgehaspelt oder kleingeschnitten und als Schrott der Metallindustrie wieder rückgeführt und recycelt.

## Patentansprüche

1. Verfahren zum Herstellen eines Verbunds (V) aus Elektroblechen (1), bei welchem ein erstes Elektroblech (1) und mindestens ein zweites Elektroblech (1), bereitgestellt werden, wobei
a) das erste Elektroblech (1) beidseitig mit einer thermisch aktivierbaren Klebstoffschicht auf Polymerbasis beschichtetet ist und das mindestens oder genau zweite Elektroblech (1) nicht mit einer thermisch aktivierbaren Klebstoffschicht auf Polymerbasis beschichtetet ist; falls mehr als ein zweites Elektroblech (1) eingesetzt wird, ist das dritte und jedes weitere n-te (mit n≥3) Elektroblech (1) mit einer thermisch aktivierbaren Klebstoffschicht auf Polymerbasis auf der Seite des jeweiligen Elektroblechs (1) beschichtet, welche zum Kontaktieren und Verbinden mit dem zweiten Elektroblech (1) beziehungsweise n-1-te Elektroblech (1) zugewandt ist; oder
b) das erste Elektroblech (1) einseitig mit einer thermisch aktivierbaren Klebstoffschicht auf Polymerbasis beschichtet ist, auf der Seite des ersten Elektroblechs (1), welche nicht zum Kontaktieren und Verbinden mit dem zweiten Elektroblech (1) zugewandt ist und das mindestens oder genau zweite Elektroblech (1) mit einer thermisch aktivierbaren Klebstoffschicht auf Polymerbasis beschichtet ist, auf der Seite des zweiten Elektroblechs (1), welche zum Kontaktieren und Verbinden mit dem ersten Elektroblech (1) zugewandt ist; falls mehr als ein zweites Elektroblech (1) eingesetzt wird, ist das dritte und jedes weitere n-te (mit n≥3) Elektroblech (1) mit einer thermisch aktivierbaren Klebstoffschicht auf Polymerbasis auf der Seite des jeweiligen Elektroblechs (1) beschichtet, welche zum Kontaktieren und Verbinden mit dem zweiten Elektroblech (1) beziehungsweise n-1-te Elektroblech (1) zugewandt ist; oder
c) das erste Elektroblech (1) einseitig mit einer thermisch aktivierbaren Klebstoffschicht auf Polymerbasis beschichtetet ist, auf der Seite des ersten Elektroblechs (1), welche nicht zum Kontaktieren und Verbinden mit dem zweiten Elektroblech (1) zugewandt ist und das mindestens zweite Elektroblech (1) beidseitig mit einer thermisch aktivierbaren Klebstoffschicht auf Polymerbasis beschichtetet ist; oder
d) das erste Elektroblech (1) beidseitig mit einer thermisch aktivierbaren Klebstoffschicht auf Polymerbasis beschichtet ist, und das mindestens oder genau zweite Elektroblech (1) mit einer thermisch aktivierbaren Klebstoffschicht auf Polymerbasis beschichtet ist, auf der Seite des zweiten Elektroblechs (1), welche zum Kontaktieren und Verbinden mit dem ersten Elektroblech (1) zugewandt ist; falls mehr als ein zweites Elektroblech (1) eingesetzt wird, ist das dritte und jedes weitere n-te (mit n≥3) Elektroblech (1) mit einer thermisch aktivierbaren Klebstoffschicht auf Polymerbasis auf der Seite des jeweiligen Elektroblechs beschichtet, welche zum Kontaktieren und Verbinden mit dem zweiten Elektroblech (1) beziehungsweise n-1-te Elektroblech zugewandt ist; oder
e) das erste Elektroblech (1) beidseitig mit einer thermisch aktivierbaren Klebstoffschicht auf Polymerbasis beschichtet ist und das mindestens zweite Elektroblech (1) und gegebenenfalls jedes weitere beidseitig mit einer thermisch aktivierbaren Klebstoffschicht auf Polymerbasis beschichtet ist;
wobei die Elektrobleche (1) übereinander in Kontakt gebracht werden und unter Kraftweinwirkung zu einem Verbund (V) miteinander verbunden werden, **dadurch gekennzeichnet, dass** vor dem In Kontakt bringen, falls vorhanden, die Klebstoffschicht des ersten Elektroblechs (1) und, falls vorhanden, die Klebstoffschicht des mindestens zweiten Elektroblechs (1), nur auf der Seite des jeweiligen Elektroblechs (1) thermisch aktiviert wird, welche zum Kontaktieren und Verbinden mit dem weiteren Elektroblech (1) zugewandt ist.

2. Verfahren nach Anspruch 1, wobei vor dem Inkontaktbringen auch die Klebstoffschicht nur auf der Seite des zweiten Elektroblechs (1) thermisch aktiviert wird, welche zum Kontaktieren und Verbinden mit dem ersten Elektroblech (1) zugewandt ist.

3. Verfahren nach einem der vorangehenden Ansprüche, wobei die thermische Aktivierung durch thermische Aktivierungsmittel (21) erfolgt.

4. Verfahren nach einem der vorangehenden Ansprüche, wobei die Klebstoffschicht auf der von der thermischen Aktivierung abgewandten Seite des ersten Elektroblechs (1) gekühlt wird.

5. Verfahren nach einem der vorangehenden Ansprüche, wobei die Klebstoffschicht auf der von der thermischen Aktivierung abgewandten Seite des zweiten Elektroblechs (1) gekühlt wird.

6. Verfahren nach Anspruch 4 oder 5, wobei die Kühlung durch Kühlmittel (22) erfolgt.

7. Verfahren nach einem der vorangehenden Ansprüche, wobei zwei einen Walzspalt bildende Rollen (13) verwendet werden, in welchem die Elektrobleche (1) übereinander in Kontakt gebracht und unter Kraftweinwirkung zu einem Verbund (V) miteinander verbunden werden.

8. Verfahren nach Anspruch 7, wobei die Rollen (13) aktiv gekühlt werden.

9. Verfahren nach einem der Ansprüche 4 bis 8, wobei die Kühlung derart erfolgt, dass die Aktivierungstemperatur der Klebstoffschicht auf der gekühlten Seite nicht überschritten wird.

10. Verfahren nach einem der vorangehenden Ansprüche, wobei der Verbund (V) nach dem Verbinden der Elektrobleche (1) gespalten wird.

11. Verfahren nach einem der Ansprüche 1 bis 9, wobei der Verbund (V) nach dem Verbinden der Elektrobleche (1) gestanzt und/oder geschnitten wird.

12. Verfahren nach Anspruch 11, wobei ein Formteil aus dem Verbund (V) gestanzt und/oder geschnitten wird, das bevorzugt als Statorlamelle oder als Rotorlamelle oder Segmente und/oder Einzelzähne davon ausgebildet ist.

13. Stator und/oder Rotor enthaltend eine Statorlamelle oder als Rotorlamelle oder Segmente und/oder Einzelzähne davon hergestellt in dem Verfahren nach Anspruch 12.

14. Elektromotor umfassend ein Gehäuse, einen Stator und Rotor, wobei der Stator oder Rotor ein Stator oder Rotor nach Anspruch 13 ist.

15. Antriebsstrang für ein Fahrzeug umfassend einen Elektromotor nach Anspruch 14.
